# EUROPEAN PATENT APPLICATION

(11) **EP 1 405 738 A1**
(43) Date of publication of application: **07.04.2004**
(21) Application number: 03255672.2
(22) Date of filing: 11.09.2003
(51) Int. Cl.: B60D 1/50, A01B 59/043

(54) **Shock absorber assembly**

(30) Priority: 14.09.2002 GB 0221410
(71) Applicant: Bomford Turner Ltd, Evesham, Worcestershire WR11 5SW (GB)
(72) Inventor: Wheeler, Arthur c/o Bomford Turner Ltd, Evesham, Worcestershire, WR11 5SW (GB)
(74) Representative: Croston, David

(57) **Abstract**

The present invention relates to a shock absorber assembly (10) for absorbing shocks transmitted between a vehicle and a hitch mounted article. The shock absorber assembly (10) comprises a shock absorber (40,54) and an adjustment means (69) for adjusting the damping effect of the shock absorber.

## Description

The present invention relates to a shock absorber assembly designed to absorb shocks transmitted between a vehicle (eg a tractor) and an article (eg agricultural equipment) that the vehicle is connected to. In particular, but not exclusively, the shock absorber assembly is used to absorb shocks transmitted from equipment to a three point hitch of a vehicle which supports the agricultural equipment.

It is known to provide a shock absorber assembly between a three point hitch of a tractor and a piece of agricultural equipment connected thereto.

However, the known shock absorber assembly has a particular damping effect which is not necessarily optimal for all kinds of equipment carried, all speeds of the tractor and all types of terrain, etc.

An aim of the present invention is to provide an improved shock absorber assembly for absorbing shocks transmitted between an article and a hitch of a vehicle.

According to a first aspect of the invention there is provided a shock absorber assembly for absorbing shocks transmitted between a vehicle and a hitch mounted article, the shock absorber assembly comprising a shock absorber and an adjustment means for adjusting the damping effect of the shock absorber.

Depending on the circumstances, the most suitable damping effect of the shock absorber in accordance with the invention can be selected so as to damp shocks transferred between the vehicle and the hitch mounted article.

The adjustment means preferably comprises means for adjusting the stiffness of the shock absorber.

The assembly may be located on a vehicle hitch or on an article to be mounted on a vehicle hitch.

The hitch may be designed to support fully the weight of the article. The hitch may have one or a plurality of connection points. Preferably, the hitch is a three-point hitch.

According to a second aspect of the invention there is provided a shock absorber assembly for absorbing shocks transmitted between a vehicle and a hitch mounted article, the shock absorber assembly comprising a frame and a movable part arranged to connect the frame to a hitch, a shock absorber positioned between the frame and the movable part, and an adjustment means for adjusting the damping effect of the shock absorber.

The movable part of the second aspect may comprise a pivotable lever.

According to a third aspect of the invention there is provided a shock absorber assembly on a vehicle hitch or on an article to be mounted on a vehicle hitch, the assembly being for absorbing shocks between the vehicle and the article, and comprising a shock absorber and an adjustment means for adjusting the damping effect of the shock absorber.

The shock absorber assembly may comprise a frame and a pivotable lever designed to connect the frame to the hitch.

According to a fourth aspect of the invention there is provided a vehicle hitch arrangement having a shock absorber assembly for absorbing shocks between the vehicle and an article to be mounted on the hitch, the shock absorber assembly comprising a shock absorber and adjustment means for adjusting the damping effect of the shock absorber.

According to a fifth aspect of the invention there is provided a vehicle hitch arrangement mounting an article, a shock absorber assembly for absorbing shocks between the vehicle and an article, the shock absorber assembly comprising a shock absorber and adjustment means for adjusting the damping effect of the shock absorber.

The shock absorber assembly may comprise a resilient member. In such a case, the adjustment means comprises means for at least partially loading the resilient member. The resilient member may comprise a spring, for example a compression, tension or leaf spring. Alternatively, the resilient member may comprise an elastomeric pad, made of, for example, rubber. The elastomeric pad may comprise locating means which prevents radial slippage of the pad.

Preferably, the means for at least partially loading the resilient member comprises a bolt and nut arrangement, whereby one of the bolt and nut is turnable so as to load the resilient member.

Two or more adjustable shock absorber assemblies may be provided. In one preferred embodiment of the invention, a shock absorber assembly comprises two shock absorbers and adjustment means for adjusting the damping effect of each shock absorber. The first shock absorber may be arranged to damp a "jouncing" motion of the article, the second shock absorber may be arranged to damp a "rebound" motion of the article. Preferably, respective adjustment means are provided for independently adjusting the damping effect of each shock absorber. In this embodiment, a single screw threaded shaft may receive two nuts, each being independently turnable so as to load the respective resilient member.

The shock absorber assembly may comprise a fluid filled cylinder against which a piston acts. The cylinder may comprise a valve which regulates the flow of fluid into or out of the cylinder or between two chambers within a cylinder. The valve may be arranged so as to adjust the damping effect of the shock absorber in "jouncing" motion of the article, or in "rebound" motion. Two such valves may be provided and are preferably independently adjustable so as to provide individual damping effect of the cylinder in "jounce" and "rebound".

A shock absorber assembly in accordance with the invention will now be described, by way of example only, and with reference to the accompanying drawings, in which,
Figure 1 is a perspective view, which is simplified and partly in cut-away, of a shock absorber assembly in accordance with the invention,
Figure 2 is a cross-section of part of the shock absorber assembly of Figure 1, taken along a mid-plane of a lever of the shock absorber assembly, in the direction of arrow II in Figure 1,
Figure 3 is a side view of the shock absorber assembly of Figure 1, in the direction of arrow III in Figure 1,
Figure 4 is a schematic side view of another shock absorber assembly in accordance with the invention, and
Figure 5 is a schematic side view of yet another shock absorber assembly in accordance with the invention.

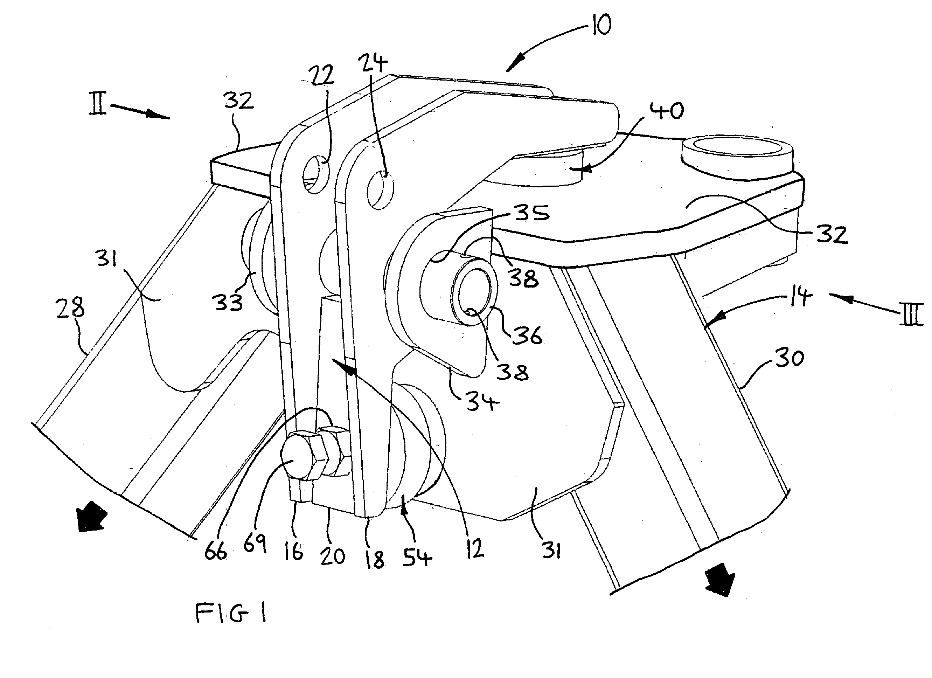

Referring to Figure 1, a shock absorber assembly 10 comprises a lever 12 and a frame 14. The shock absorber assembly 10 is part of a larger system (not shown for conciseness), in which the lever 12 is connected to a three point hitch of a tractor and the frame 14 is connected to, or part of, an article of agricultural equipment.

Referring to Figure 1, the lever 12 comprises spaced, substantially parallel, first and second plates 16, 18, both of which are generally L-shaped. Each plate 16, 18 has an upper arm and a lower arm. The upper arms of the plates 16, 18 will hereinafter be collectively referred to as an "upper arm" of the lever 12. The lower arms of the plates 16, 18 will be referred to as a "lower arm" of the lever 12. Two spacer plates (only the lower of which is shown by reference numeral 20) are arranged between the first and second plates 16, 18 so as to connect and separate the plates. The first plate 16 has a link aperture 22 therethrough, adjacent the apex of the "L" where the two arms of the L-shaped first plate 16 meet. The second plate 18 has a link aperture 24 of a similar size to the aperture 22 in the first plate. The apertures 22, 24 are arranged coaxially.

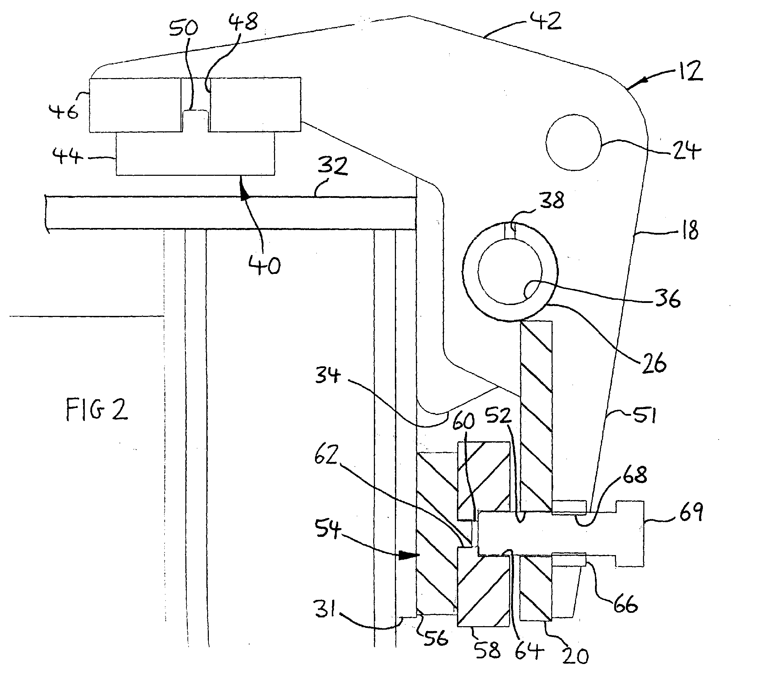

Referring to Figure 2, each of the first and second plates 16, 18 comprises a pivot pin aperture 36 (one of which is obscured), the apertures being coaxial. The pivot pin apertures 36 are of a larger size than the link apertures 22, 24 and are positioned between the link apertures and the free ends of the lower arms of the L-shaped plates 16, 18.

Referring to figure 1, the frame 14 is a known "A-frame". The frame 14 comprises a first arm 28 and a second arm 30. It will be appreciated that figure 1 shows only part of the frame 14, eg the first arm 28 and second arm 30 extend in the directions of the bold arrows, the lower end of each of the first arm and second arm defining a comer region of the frame 14, each of which can be connected to a corresponding lower link of a 3-point hitch. A face plate 31 is mounted on the side of the frame designed to face the vehicle to which the frame is to be hitched. The face plate 31 is arranged on the frame 14 at the apex thereof, where the first and second arms 28, 30 meet. A top plate 32 is arranged on a side of the frame 14 which is designed to face upwards. Again, the top plate 32 is arranged on the frame 14 where the first and second arms 28, 30 meet.

Still referring to figure 1, the face plate 31 has a pair of flanges 33, 34 projecting therefrom. The flanges 33, 34 are substantially similar and spaced apart by a distance slightly larger than the distance between the two outer faces of the first plate 16 and the second plate 18 of the lever 12. The flanges 33, 34 each carry a pivot pin collar 35, the collars being coaxial. A pivot pin 36 is rotatably received by the collars 35, and extends through pivot pin apertures 26 in the plates 16, 18 so as to connect the lever 12 to the frame 14 in pivotal manner. The pivot pin 36 comprises retaining pin apertures 38 which can receive a retaining pin (not shown) which prevents longitudinal movement of the pivot pin and hence disconnection of the lever 12 and frame 14 and rotation of the pivot pin.

The top link (not shown) of a 3-point hitch of a vehicle is then connected to the lever 12 by passing a pin through the link apertures 22, 24 in the first and second plates 16, 18 and a corresponding aperture in the top link. This indirectly connects the top link to the frame 14 via lever 12. The two (other) lower comers of the frame 14 (not shown) can then be connected to the two lower links of the 3-point hitch. In this way, the piece of equipment on, or integral with, the A-frame 14 is fully connected to the 3-point hitch and therefore can be fully supported by the vehicle.

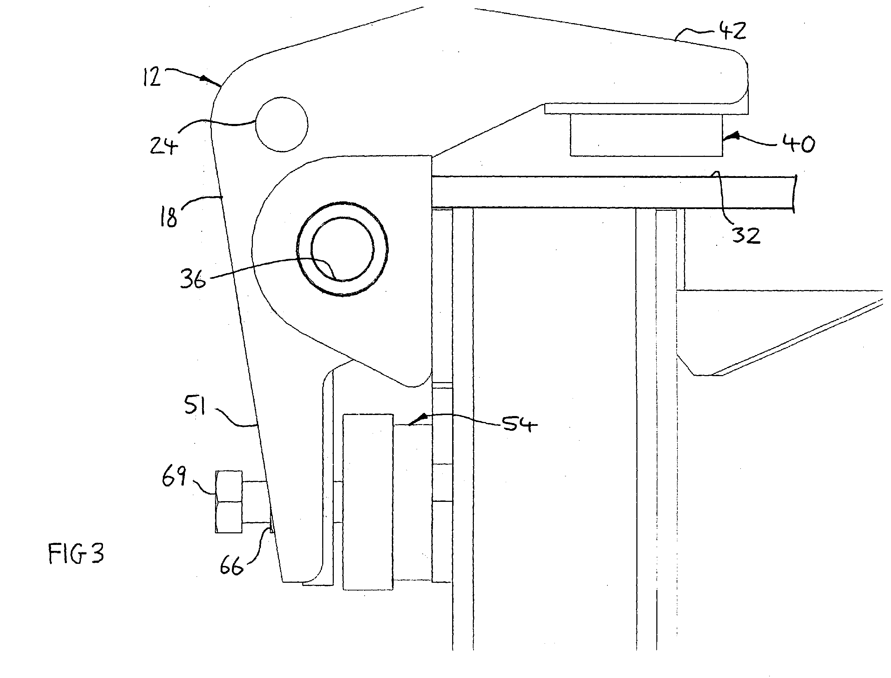

Referring to Figures 2 and 3, a first shock absorber assembly 40 is arranged at the free end of the upper arm 42 of the lever 12 facing towards the top plate 32 of the frame 14. The first shock absorber assembly 40 comprises a rubber pad 44 mounted upon a mounting disc 46 arranged on the upper arm 42. The mounting disc 46 has a central bore 48 therethrough. The rubber pad 44 is also disc like and has a nipple 50 projecting therefrom, which is designed to locate in the bore 48 of the mounting disc 46 so as to secure the pad against radial movement thereof.

Still referring to Figure 2, the spacer plate 20 on the lower arm 51 of the lever 12 comprises a plate bore 52. A second shock absorber assembly 54 is arranged at the free end of the lower arm 51 of the lever 12 facing towards the face plate 31 of the frame 14. The shock absorber assembly 54 comprises a rubber pad 56 on a mounting disc 58. The pad 56 is disc like and has a nipple 60 projecting centrally therefrom. The nipple 60 locates in a central bore 62 on one side of the disc 58. The mounting disc 58 has a seat 64 on the other side, which is enlarged with respect to, and concentric with, the bore 62. The seat 64 receives a tail end of a bolt (see below). The rubber pad 56 is mounted on the face plate 31 so that the seat is in line with the plate bore 52 in the lower arm 51. Towards the free end of the lower arm 51 of the lever 12 a fixed nut 66 is positioned on the "open" side of the spacer plate 20 (ie the right hand side in Figure 2) coaxial with the plate bore 52 in the spacer plate 20. In this way, a bolt 69 can pass from the open side to the hidden side of the lower arm 51 of the lever 12 whilst threadably engaged with the nut 66. It should be noted that the plate bore 52 is a clearance fit for the bolt 69 rather than a threaded fit.

Depending on the circumstances, the head of the bolt 69 can be adjusted so as to increase or decrease (as required) the force on the rubber pad 56. As can be seen from Figure 2, inward turning of the bolt 69 increases the force on the disc 58 of rubber pad 56, which tends to increase the stiffness of the rubber pad 56 of the second shock absorber 54. Correspondingly, a decrease in the load from the bolt 69 decreases the stiffness of the pad 56. It will be appreciated that the second shock absorber 54 and the shock absorber assembly 10 in general has greater versatility with respect to the known shock absorber.

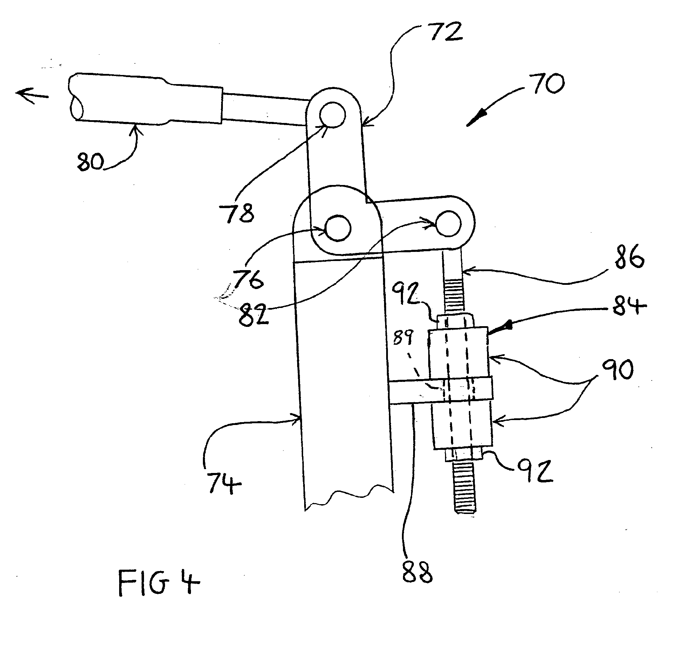

Referring to Figure 4, another shock absorber assembly 70 in accordance with the invention comprises a lever 72 and a frame 74. The lever 72 and the frame 74 are connected at frame pivot pin 76. A link pivot pin 78 connects the lever 72 to a top link 80 of a 3-point hitch, which in turn is connected to a vehicle such as a tractor (in the direction of the arrow). A shock absorber pivot pin 82 connects the lever 72 to a shock absorber 84. The shock absorber 84 comprises a bar 86 connected to the shock absorber pivot pin 82. An abutment plate 88 extends from the frame 74. The plate 88 has a bore 89 formed therethrough, through which the bar 86 extends with a clearance so as to allow sliding of the bar 86 through the bore 89. Compression elements 90 are such as rubber bushes are arranged on the bar 86 on both sides of the abutment plate 88. Nuts 92 are arranged on threaded sections of the bar 86 adjacent to surfaces of the compression elements 90 remote from the abutment plate 88 of the frame 74. In use, independent adjustment of the nuts 92 changes the stiffness characteristics of the compression elements 90 so as to change the damping effect of the shock absorber during both rebound and jounce. In particular, tightening the upper nut 92 increases the damping effect of the shock absorber 84 during rebound and during jounce.

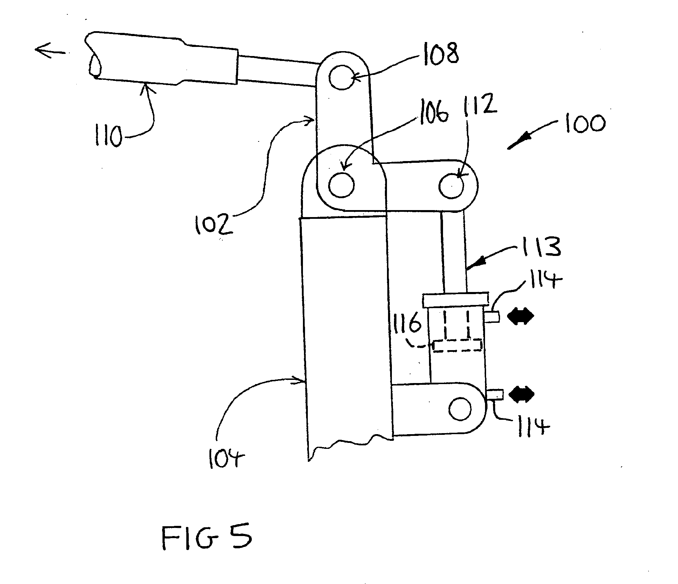

Figure 5 shows yet another shock absorber assembly 100 in accordance with the invention. The shock absorber assembly 100 comprises a lever 102 and a frame 104 connected by a frame pivot pin 106. A link pivot pin 108 connects the lever 102 to the top-link 110 of a 3-point hitch, which in turn is connected to a tractor. A shock absorber pivot pin 112 connects a shock absorber 113 to the lever 102 and thus to the frame 104. The shock absorber 113 takes the form of a hydraulic cylinder or gas strut. Gas or liquid can be pumped into and out of the apertures 114 (as shown by the bold arrows) to vary the resistance offered by the cylinder or strut. The top or bottom aperture 114 has a valve which regulates the flow of fluid therethrough. It will be appreciated that this valve can be fitted on the aperture above or below the piston head so as to effect damping during, respectively, rebound or jounce. The other aperture 114 is unregulated. In use, pivoting movement of the lever 102 tends to move a piston 116 up and down within the cylinder or strut. It will be appreciated that the shock absorber 113 converts mechanical energy to thermal energy as fluid is forced through orifices 114 at high velocity. Sizing the shock absorber is relatively straightforward once all inputs are known/conservatively estimated.

It will be appreciated that the various shock absorber assemblies in accordance with the invention offer a range of damping values, and, therefore, a greater range of use.

## Claims

1. A shock absorber assembly for absorbing shocks transmitted between a vehicle and a hitch mounted article, the shock absorber assembly comprising a shock absorber and an adjustment means for adjusting the damping effect of the shock absorber.

2. A shock absorber assembly according to claim 1, in which the adjustment means comprises means for adjusting the stiffness of the shock absorber.

3. A shock absorber assembly according to Claim 1 or 2, in which the assembly is mounted on a vehicle hitch.

4. A shock absorber assembly according to Claim 1 or 2, in which the assembly is mounted on an article to be mounted on a vehicle hitch.

5. A shock absorber assembly for absorbing shocks transmitted between a vehicle and a hitch mounted article, the shock absorber assembly comprising a frame and a movable part arranged to connect the frame to a hitch, a shock absorber positioned between the frame and the movable part, and an adjustment means for adjusting the damping effect of the shock absorber.

6. A shock absorber assembly according to Claim 5, in which the movable part is a pivotable lever.

7. A shock absorber assembly on a vehicle hitch or on an article to be mounted on a vehicle hitch, the assembly being for absorbing shocks between the vehicle and the article, and comprising a shock absorber and an adjustment means for adjusting the damping effect of the shock absorber.

8. A shock absorber assembly according to Claim 7, in which the shock absorber assembly comprises a frame and a pivotable lever designed to connect the frame to the hitch.

9. A shock absorber assembly according to any preceding claim, in which the shock absorber assembly comprises a resilient member.

10. A shock absorber assembly according to Claim 9, in which the adjustment means comprises means for at least partially loading the resilient member.

11. A shock absorber assembly according to Claim 9 or 10, in which the resilient member comprises one or more of a spring, for example a compression, tension or leaf spring, or an elastomeric pad, made of, for example, rubber.

12. A shock absorber assembly according to Claim 11 and where the resilient member is an elastomeric pad, the elastomeric pad comprising locating means to prevent radial slippage of the pad.

13. A shock absorber assembly according to Claim 10, 11 or 12 in which the means for at least partially loading the resilient member comprises a bolt and nut arrangement, whereby one of the bolt and nut is turnable so as to load the resilient member.

14. A shock absorber assembly according to any preceding claim, in which two or more adjustable shock absorber assemblies are provided.

15. A shock absorber assembly according to any preceding claim, in which the shock absorber assembly comprises two shock absorbers and adjustment means for adjusting the damping effect of each shock absorber.

16. A shock absorber assembly according to Claim 15, in which the first shock absorber is arranged to damp a "jouncing" motion of the article and the second shock absorber is arranged to damp a "rebound" motion of the article.

17. A shock absorber assembly according to Claim 15 or 16, in which respective adjustment means are provided for independently adjusting the damping effect of each shock absorber.

18. A shock absorber assembly according to Claim 17, in which respective adjustment means is provided by a single screw threaded shaft receiving two nuts, each nut being independently turnable so as to load the respective resilient member.

19. A shock absorber assembly according to any of Claims 1 to 8 or any of Claims 14 to 17 when dependent upon Claims 1 to 8, in which the shock absorber assembly comprises a fluid filled cylinder against which a piston acts.

20. A shock absorber assembly according to Claim 19, in which the cylinder comprises a valve which regulates the flow of fluid into or out of the cylinder or between two chambers within a cylinder.

21. A shock absorber assembly according to Claim 20, in which the valve is arranged so as to adjust the damping effect of the shock absorber in "jouncing" motion of the article, or in "rebound" motion.

22. A shock absorber assembly according to Claim 21, in which two such valves are provided and are independently adjustable so as to provide individual damping effect of the cylinder in "jounce" and "rebound" respectively.
